Europäisches Patentamt

European Patent Office

Office européen des brevets

(11) Veröffentlichungsnummer: **0 123 788**
**A2**

(12) **EUROPÄISCHE PATENTANMELDUNG**

(21) Anmeldenummer: **84100794.1**

(22) Anmeldetag: **26.01.84**

(51) Int. Cl.³: **H 02 B 1/08,** H 02 B 1/12

(30) Priorität: **04.02.83 DE 3303764**

(43) Veröffentlichungstag der Anmeldung: **07.11.84**
**Patentblatt 84/45**

(84) Benannte Vertragsstaaten: **AT BE CH DE FR GB IT LI LU NL SE**

(71) Anmelder: **Gustav Hensel KG, Burcherstrasse, D-5940 Lennestadt (DE)**

(72) Erfinder: **Altmann, Uwe-Paul-Arthur, Am Mühlacker 2, D-5950 Finnentrop (DE)**
Erfinder: **Bicher, Wolfgang, Klippe 5, D-5952 Attendorn (DE)**
Erfinder: **Budde, Gerhard, Faulebutter 32, D-5940 Lennestadt 17 (DE)**
Erfinder: **Cater, Rudolf-Hans, In der Riemeske 33, D-5948 Schmallenberg 8 (DE)**
Erfinder: **Kowalewski, Günter, Storchenstrasse 14, D-5940 Lennestadt 14 (DE)**
Erfinder: **Ramspott, Walter, Jahnstrasse 11, D-5940 Lennestadt 12 (DE)**
Erfinder: **Wünsche, Günter, Lindenstrasse 78, D-5940 Lennestadt 1 (DE)**

(74) Vertreter: **Ludewig, Karlheinrich, Dipl.-Ing. et al, Patentanwälte Dipl.-Phys. Buse Dipl.-Phys. Mentzel Dipl.-Ing. Ludewig Unterdörnen 112, D-5600 Wuppertal 2 (DE)**

(54) **Elektrisches Installationsgerät.**

(57) Das elektrische Installationsgerät weist ein kastenförmiges Gehäuse mit einem Unterteil und einem Oberteil auf. Hierbei sind die Seitenwände des Unterteiles gegenüber den Stirnseiten des Unterteiles mit einer wesentlich geringeren Höhe ausgestattet, um so bei der Montage bei abgenommenem Oberteil das Innere leicht erreichen zu können, um dort zu arbeiten. Der Oberteil des kastenförmigen Gehäuses weist keilförmige sich erweiternde Aufnahmen auf, in die im Gehäuseinneren befindliche Automaten, Sicherungen, Schaltgeräte u.dgl. mit ihren freien Ende hineinragen und leicht bedienbar sind. Schließlich werden die Aufnahmen durch einen Deckel sicher verschlossen, der am Oberteil schwenkbar gehaltert ist und durch eine Rastverbindung in seiner Schließstellung gehalten ist.

EP 0 123 788 A2

**PATENTANWÄLTE**

**DIPL.-PHYS. BUSE · DIPL.-PHYS. MENTZEL · DIPL.-ING. LUDEWIG**

Unterdörnen 114 · Postfach 200210 · 5600 Wuppertal 2 · Fernruf (0202) 557022/23/24 · Telex 8591606 wpat

C123788

X1

5600 Wuppertal 2, den 1.2.1983

Kennwort: "Mittelvertiefung"

Firma Gustav Hensel KG, 594o Lennestadt, Burcherstraße

## Elektrisches Installationsgerät

Die Erfindung betrifft ein elektrisches Installationsgerät, insbesondere Automatenkasten, Sicherungskasten, Kleinverteilerkasten od.dgl., mit einem kastenförmigen Gehäuse, das aus einem Unterteil und einem Oberteil besteht. Hierbei sind im Kasteninneren zur Halterung der Sicherungen, Automaten, Schaltgeräte od.dgl. am Unterteil Trageschienen vorgesehen, während am Oberteil im Kasteninneren sich erstreckende den Trageschienen gegenüberliegende Aufnahmen ausgebildet sind, die durch einen Deckel abdeckbar sind, wobei zwischen Oberteil und Unterteil eine Dichtung mit Dichtungsring vorgesehen ist. Derelei Geräte werden vielfach verwendet. Hinsichtlich des Schutzes gegen Eindringen von Feuchtigkeit und Staub weisen sie jedoch noch Nachteile auf. Darüber hinaus ist die Montage sowie das Einsetzen von Sicherungen, Automaten und Schaltgeräten sowie die Verdrahtung zeitaufwendig.

Aufgabe der Erfindung ist es daher ein Installationsgerät der eingangs genannten Art so auszubilden, daß es eine erhöhte Sicherheit gegen das Eindringen von Schmutz und Feuchtigkeit aufweist. Darüber hinaus soll das kastenförmige Installationsgerät eine genügende
Festigkeit sowie Stabilität aufweisen. Schließlich
soll die Montage und Installation wohlfeil herzustellen
sein.

Dies wird erfindungsgemäß dadurch erreicht, daß die
beiden seitlichen Seitenwände des Unterteils des
kastenförmigen Gehäuses eine wesentlich geringere Höhe
aufweisen als die beiden Stirnseiten, hierbei ist die
Höhe der Seitenwände größer als die der am Unterteil
angeordneten Trageschienen und daß die Dichtung zwischen
Oberteil und Unterteil des Gehäuses labyrinthartig ausgebildet ist. Durch die spezielle Ausbildung der Dichtung
ergibt sich eine erhöhter Schutz gegen das Eindringen
von Nässe und Staub. Darüber hinaus tritt durch die
Ausbildung der Dichtung als Labyrinthdichtung eine
Versteifung der Seitenwände auf. Die unterschiedliche
Höhengestaltung der Seitenwände in Bezug auf die Stirnseiten ergibt die Möglichkeit von der Seite her leicht
eine Verdrahtung im Inneren des Installationsgerätes
bei abgenommenen Oberteil auszuführen. Hierbei bieten
trotzdem die unterschiedlich gestalteten Höhen einen
sicheren Schutz für die verlegten Leitungen sowie eingesetzten Sicherungen bei abgenommenen Oberteil. Die
hohen Stirnseiten bieten außerdem die Möglichkeit sicher
die Leitungen und Kabel in das Gehäuseinnere zu führen.
Schließlich wird durch die Höhe der Seitenwände, die
etwas größer ist als die Höhe der Trageschienen, die
Installation vereinfacht, wobei durch diese Gestaltung
auch das Unterteil eine ausreichende Festigkeit besitzt.

Vorteilhafterweise ist die Labyrinthdichtung im Querschnitt
am Unterteil als ein U-förmiger Abschnitt ausgebildet,

0123788

in dessen Inneren der Dichtring angeordnet ist und am Oberteil als V-förmiger Abschnitt, dessen einer Schenkel sich auf dem Dichtungring abstützt. Durch dieses Abstützen auf dem Dichtring wird eine überaus sichere Abdichtung erzielt. Darüber hinaus wird durch die V-förmige und U-förmige Gestaltung der Dichtungsabschnitte eine sichere Labyrinthdichtung geschaffen, die ein Eindringen von Staub und Feuchtigkeit schon vor dem Dichtring verhindert. Darüber hinaus bietet diese Gestaltung eine sichere Versteifung der Seitenwände von Unter- und Oberteil, so daß der Kasten selbst bei dünnen Materialwänden eine ausreichende Steifigkeit erhält. Vorteilhafterweise ragt ein Schenkel des Dichtungsabschnittes bereichsweise aus der Gehäusewand nach außen hervor. Durch dieses Hervorragen wird zum einen die Steifigkeit ohne Vernachlässigung der Dichtung erhöht, zum anderen wird durch dieses Hervorragen gewährleistet, daß, falls mehrere Kästen aneinander gebaut sind, trotzdem ein sicheres Abheben des Oberteils des Installationsgerätes gewährleistet ist, da hier zugleich eine Art Abstandshalter geschaffen wird.

Empfehlenswert ist es, wenn die beiden Stirnseiten des Unterteiles eine Vielzahl von Kabeleinführungsöffnungen aufweisen, die durch herausbrechbare Wandteile verschlossen sind, da so in einfacher Weise ein Hineinführen der Leitungen in das Installationsgerät gewährleistet ist, ohne daß die Montage und die Installation im Inneren behindert wird. Hierbei ist insbesondere durch die Höhe der Stirnwände gewährleistet, daß auch Einführungsöffnungen mit unterschiedlichem Durchmesser in die Stirnwand eingelassen werden können, so daß auch Kabel mit unterschiedlichem Durchmesser sicher ins Innere geleitet werden können.

Um den Zusammenbau des kastenförmigen Installationsgerätes zu erleichtern, ist es günstig, wenn das Oberteil elastische Führungsstifte aufweist, die in ein
Lager des Unterteiles eingreifen, da über die Führungsstifte noch beim Aufsetzen des Oberteils ein Ausrichten
zum Unterteil möglich ist.

Bei einem Ausführungsbeispiel der Erfindung sind
am Unterteil des Installationsgerätes zu dessen Befestigung
an einer Wand zwei im Abstand angeordnete Reihen von jeweils
drei über herausbrechbare Teile verschlossene Befestigungsöffnungen vorgesehen, die langlochartig gestaltet sind.
Hierbei erstreckt sich das mittlere Langloch in Gehäuselängsrichtung, während die beiden äußeren in einen
Winkel von ca. 45° Grad zur Gehäuselängsrichtung angeordnet sind. Diese Ausbildung von Befestigungsöffnungen
in zwei Reihen gestattet es, das Installationsgerät auch
an unterschiedlichen Orten und mit unterschiedlicher
Bestückung sicher an eine Wand zu befestigen, da wahlweise diese Öffnungen verwendet werden können. Durch
die sich in unterschiedlicher Richtung erstreckenden
Länglöcher ist außerdem gewährleistet, daß der Kasten
noch bei seiner Befestigung ausgerichtet
werden kann.

Um die Installation zu vereinfachen, ist es zweckmäßig, wenn auf der Gehäuseoberseite außerhalb des
Deckels eine sich nahezu über die gesamte Breite erstreckende Vertiefung vorgesehen wird, die eine geringe
Tiefe aufweist, da in diese Vertiefung leicht Beschriftungsfelder angeordnet werden können, wobei diese Vertiefungen
einen Schutz gegen Beschädigung der Beschriftungsfelder
gewährleisten.

Empfehlenswerterweise ist die Trageschiene im Abstand über dem Boden des Unterteils angeordnet, um so auch noch unter den Trageschienen sicher Leitungen durchführen zu können, beispielsweise zu der nächsten Trageschiene. Hierbei empfiehlt es sich, am Unterteil angeformte Abstandshalter zur Auflage der Trageschiene vorzusehen, wobei die Abstandsschalter in Kreuzesform ausgebildet sind. Durch die Abstandshalter wird festgelegt mit welcher Höhe die Trageschienen über dem Boden des Unterteiles angeordnet sind, wobei die Kreuzesform der Abstandshalter gewährleistet, daß die Trageschiene sicher auf den Abstandshaltern aufliegt und befestigt werden kann. Von Vorteil ist es, wenn die Abstandshalter zum einen einen Zapfen aufweisen, der zur Lagesicherung in ein Loch der Trageschiene eingreift und zum anderen in ein Gewinde zur Schraubbefestigung der Trageschiene, da so eine genaue Ausrichtung und Befestigung der Trageschiene auf den Abstandshalter gegeben ist. Zur weiteren Vereinfachung der Installation ist die Schraubenöffnung in der Trageschiene in Draufsicht gesehen, schlüssellochartig gestaltet, so daß bei der Installation der Schienen zunächst die Schraube mit einigen Gewindedrehungen auf dem Abstandshalter befestigt wird, dann die Trageschiene auf die Schrauben aufgehängt, bis der Schaft der Schraube zu dem Bereich mit der geringeren Breite der schlüssellochartigen Öffnung kommt, wobei dann die Schraube schließlich festgedreht wird. Empfehlenswerterweise sind die Randbereiche der Schraubenöffnungen der Trageschienen gegenüber dem Boden der Trageschiene vertieft angeordnet, derart, daß der Schraubenkopf nicht aus dem Trageschienenboden hervorragt, um so zu gewährleisten, daß die Trageschiene vollständig mit den Sicherungen und Automaten und Schaltgeräten bestückt werden kann. Von Vorteil ist es, wenn die Trageschienen an ihrer

beiden Enden Anschläge aufweisen, um so auch die einzusetzenden Automaten an den Enden zu halten, wodurch die Installation insgesamt vereinfacht wird.

Bei einem besonderen Ausführungsbeispiel der Erfindung erweitern sich die am Gehäuseoberteil angeordneten Aufnahmen keilförmig nach dem Deckel. Durch diese Erweiterungen sind nunmehr auch von oben bei aufgesetztem Oberteil die Sicherungen, Automaten und Schaltgeräte leicht zugänglich, insbesondere können sie einfach bedient werden, ohne daß die Seitenwände der Aufnahme störend hervorstehen. Darüber hinaus ist gewährleistet, daß jeweils an der unteren Fläche der keilförmigen Aufnahme ein Beschriftungsfeld angeordnet werden kann, so daß die einzelnen eingesetzten Teile leicht zu identifizieren sind, was die Installation erheblich vereinfacht. Günstigerweise ist das Beschriftungsfeld an der Keilfläche durch eine Verrastung halterbar, da so leicht das Beschriftungsfeld eingesetzt werden kann und später gegebenenfalls leicht ausgetauscht werden kann, trotzdem aber sicher gehaltert ist. Hierbei kann das Beschriftungsfeld auch von einer durchsichtigen Schutzhülle noch umgeben sein, so daß selbst bei dünnen Beschriftungsfeldern eine sichere Halterung gewährleistet ist.

Bei einem besonderen Ausführungsbeispiel der Erfindung weist der die Aufnahme verschließende schwenkbare Deckel zur Halterung in seine Schließstellung wenigstens einen Rastverschluß auf, der als Torsionsfederverschluß ausgebildet ist. Hierbei sind bei Bewegung der Rastnase des Verschlusses aus Haltehinterschneidungen
Werkstoffbereiche verdrehbar. Diese Ausbildung erlaubt
eine sichere Befestigung des Deckels in seiner Schließstellung, da über die Torsionsfederkraft eine sichere
Federkraft gewährleistet ist, so daß selbst bei öfteren
Öffnen und Schließen des Deckels immer ein sicherer Verschluß gegeben ist. Günstig ist es, wenn der Torsionsfederverschluß mehrere in Abstand angeordnete Rastnasen
aufweist, die an einem Griffteil angeordnet sind. Hierbei
ist das Griffteil über Verdrehbereiche am Deckel angeformt, da hier eine sichere Halterung des Deckels gewährleistet ist. Darüber hinaus ist die Herstellung
des Deckels über die Anformung des Griffteiles relativ
einfach. Schließlich bieten die       Rastnasen auch eine
Gewähr dafür, daß der Deckel sicher die Aufnahme verschließt.
Vorteilhafterweise greift zur schwenkbaren Lagerung der
Deckel mit seinen Lagerzapfen in am Gehäuse befestigte
Lageraufnahmen ein. Hierbei weisen die federnden Lageraufnahmen auf der dem Gehäuse abgewandten Seite eine sich
in Richtung der Lagerzapfen erstreckende Ausnehmung auf,
dessen Breite geringer ist, als der Durchmesser der Lagerzapfen. Auf diese Weise kann zur Befestigung des Deckels
zur schwenkbaren Lagerung der Lagerzapfen leicht in die
Aufnahmen eingerastet werden. Darüber hinaus ist gewährleistet, falls durch Unachtsamkeit bei der Installation
plötzlich auftretende Stöße bei Öffnen oder im Offenzustand
auftreten, daß die Lageraufnahmen nicht zerstört werden,
sondern der Deckel aus den Lageraufnahmen herausrutscht. Darüber hinaus ist schließlich noch gewährleistet,
daß für etwaige Montagearbeiten oder Installationsarbeiten
der Deckel leicht entfernbar ist, ohne daß er störend im
Wege steht. Empfehlenswerterweise sind die Befestigungsstellen für die Lageraufnahmen sowie die Hinterschneidungen
zum Eingriff der Rastnasen an beiden Gehäuseseiten zugleich vorgesehen, um so je nach der Installationsart
den Deckel mit seiner schwenkbaren Halterung auf beiden Seiten
befestigen zu können.

Auf der Zeichnung ist der Erfindungsgegenstand in mehreren Ausführungsbeispielen dargestellt, und zwar zeigen

Fig. 1 ein erstes Ausführungsbeispiel eines elektrischen Installationsgerätes in perspektivischer Darstellung,

Fig. 2 die Draufsicht auf das Unterteil des Gehäuses des Installationsgerätes bei einem anderen Ausführungsbeispiel,

Fig. 3 die Seitenansicht des Unterteiles und

Fig. 4 eine Stirnansicht des Unterteiles,

Fig. 5 einen Schnitt nach der Linie V - V der Fig. 2 und

Fig. 6 einen Dichtungsabschnitt nach der Linie VI - VI der Fig. 2,

Fig. 7 eine Draufsicht auf eine Trageschiene in größerem Maßstabe,

Fig. 8 einen Ausschnitt aus dem Boden des Unterteiles mit Abstandshalter und Trageschiene,

Fig. 9 eine Draufsicht auf das Gehäuseoberteil des Installationsgerätes,

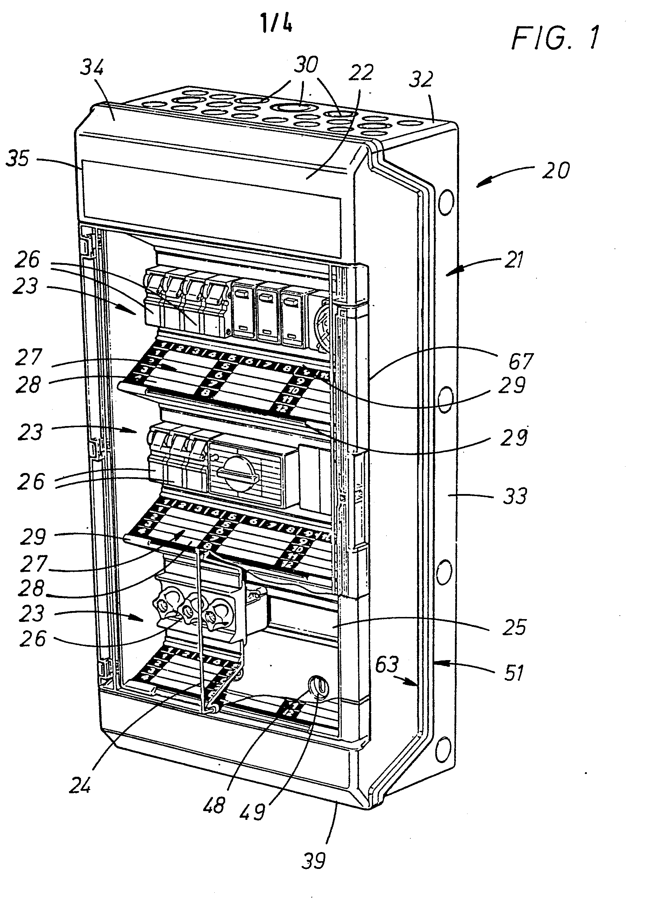

Fig. 1o eine Seitenansicht des Oberteiles,

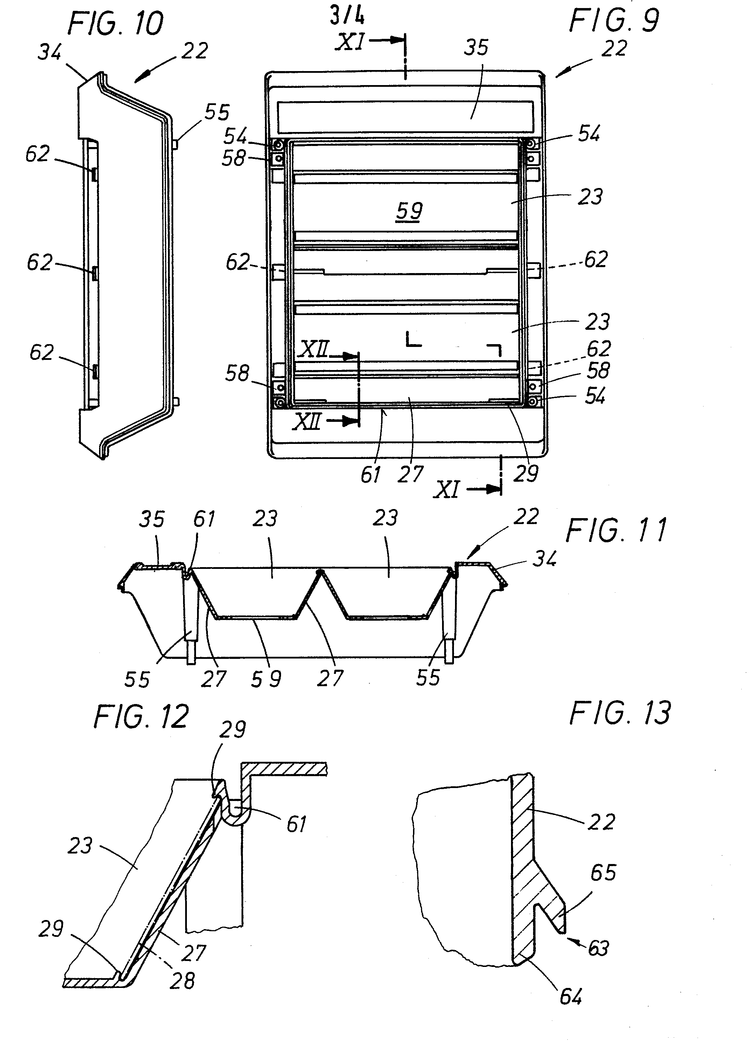

Fig. 11 einen Schnitt nach der Linie XI - XI der Fig. 9,

0123788

Fig. 12    einen Ausschnitt aus dem Oberteil gemäß
           der Linie XII - XII der Fig. 9,

Fig. 13    einen Schnitt durch den Dichtungsabschnitt
           des Oberteiles,

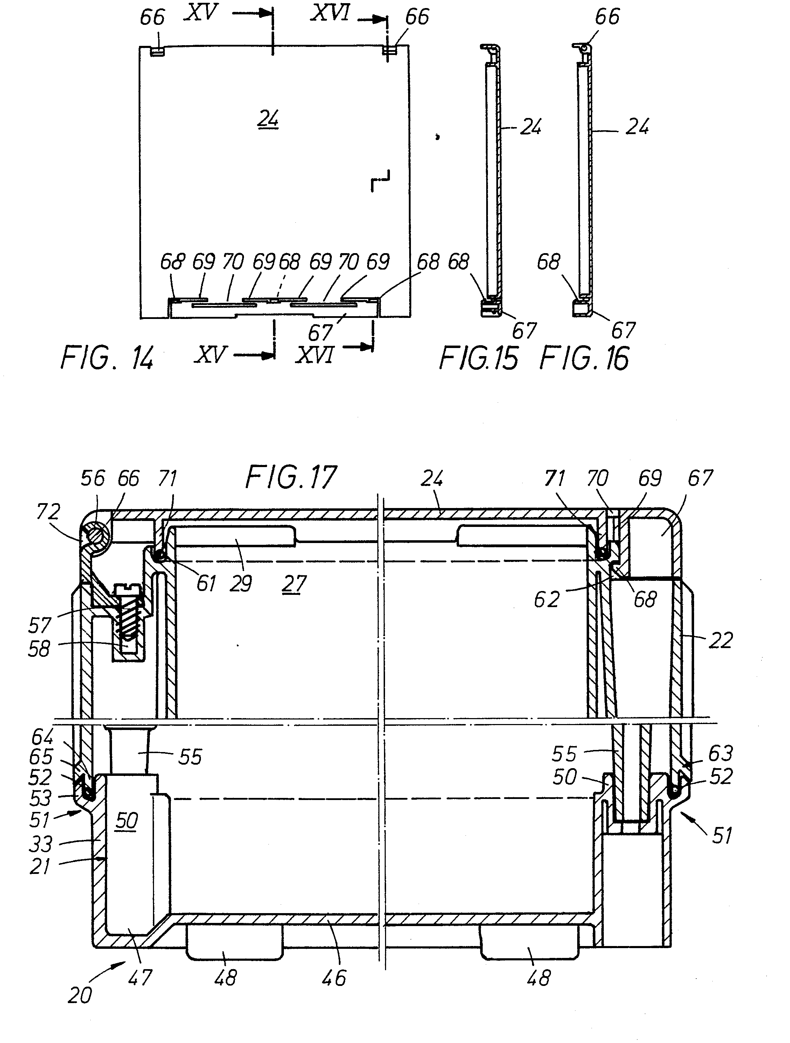

Fig. 14    eine Draufsicht auf den Deckel,

Fig. 15    einen Schnitt durch den Deckel nach der
           Linie XV - XV der Fig. 14,

Fig. 16    einen weiteren Schnitt durch den Deckel nach
           der Linie XVI - XVI der Fig. 14 und

Fig. 17    einen Schnitt durch das Gehäuse mit aufgesetztem Deckel.

Das in der Zeichnung dargestellte Installationsgerät
ist als Kleinverteilerkasten ausgebildet. Es besteht
aus einem kastenförmigen Gehäuse 20 mit einem Unterteil 21,
und einem Oberteil 22. Der Oberteil 22 weist über die
Breite sich erstreckende Aufnahmen 23 auf. Diese Aufnahmen
werden durch einen Deckel 24 verschlossen.

Im Inneren des kastenförmigen Gehäuses 2o sind Trageschienen 25 vorgesehen. Diese Trageschienen dienen
zur Halterung von Automaten, Sicherungen, FI-Schaltern
u.dgl. die in Fig. 1 beispielsweise eingezeichnet und mit
26 bezeichnet sind. Diese Geräte 26 ragen mit ihrem Kopfteil in die Aufnahmen 23 hinein.

Wie weiter noch aus Fig. 1 zu erkennen ist, erweitern sich die Aufnahme im Längsschnitt gesehen, keilförmig, so daß die Geräte 26 von der Oberseite aus leicht zu bedienen sind. Durch diese keilförmige Gestaltung werden unterhalb der Geräte 26 Keilflächen 27 gebildet, auf die Beschriftungsfelder 28 vorgesehen sind. Diese Beschriftungsfelder sind mittels einer Rastverbindung 29 auf den Keilflächen befestigt.

Wie weiter Fig. 1 noch zeigt, sind die Wände des Unterteiles unterschiedlich hoch gestaltet. Hierbei weisen die Stirnwände 32 eine wesentlich größere Höhe auf, als die Seitenwände 33. Die Wände 32 und 33 tragen Einführungsöffnungen 3o und 31, wobei die Einführungsöffnungen durch nicht näher bezeichnete herausbrechbare Teile in an sich bekannter Weise verschlossen sind. Je nach Bedarfsfall werden die Öffnungen freigelegt. Aus Fig.1 ist noch weiter zu erkennen, daß die Stirnwände 32 ein Vielzahl von Einführungsöffnungen 3o aufweisen.

Das Oberteil 22 ist im Bereich der Stirnwände 32 des Unterteiles sind mit Abschrägungen 34 versehen. Darüber hinaus befinden sich auf der Oberseite des Oberteiles 22 flächige Vertiefungen 35, die zur Aufnahme von weiteren Beschriftungsfeldern dienen. Hierbei ist die Tiefe der Vertiefungen so hoch, daß die Beschriftungsfelder knapp unter der Oberfläche des Oberteiles 22 liegen.

Bei diesem Ausführungsbeispiel nach Fig. 1 weist das Oberteil drei Reihen von Aufnahmen 23 auf. Es sei hier noch erwähnt, daß die Aufnahmen, falls der Raum nicht durch die Automaten, Sicherungen u.dgl. 26 vollständig ausgenutzt ist, nach dem Boden hin noch Gehäusewände verschlossen sein können, die aber leicht zu entfernen sind.

Es sei hier noch zu Fig. 1 nachgetragen, daß der die drei Aufnahmen 23 abdeckende durchsichtige Deckel 24 unten rechts weggebrochen dargestellt ist. Ebenso ist die untere Aufnahme teilweise weggebrochen dargestellt, um so das Innere des kastenförmigen Gehäuses 2o besser zeigen zu können.

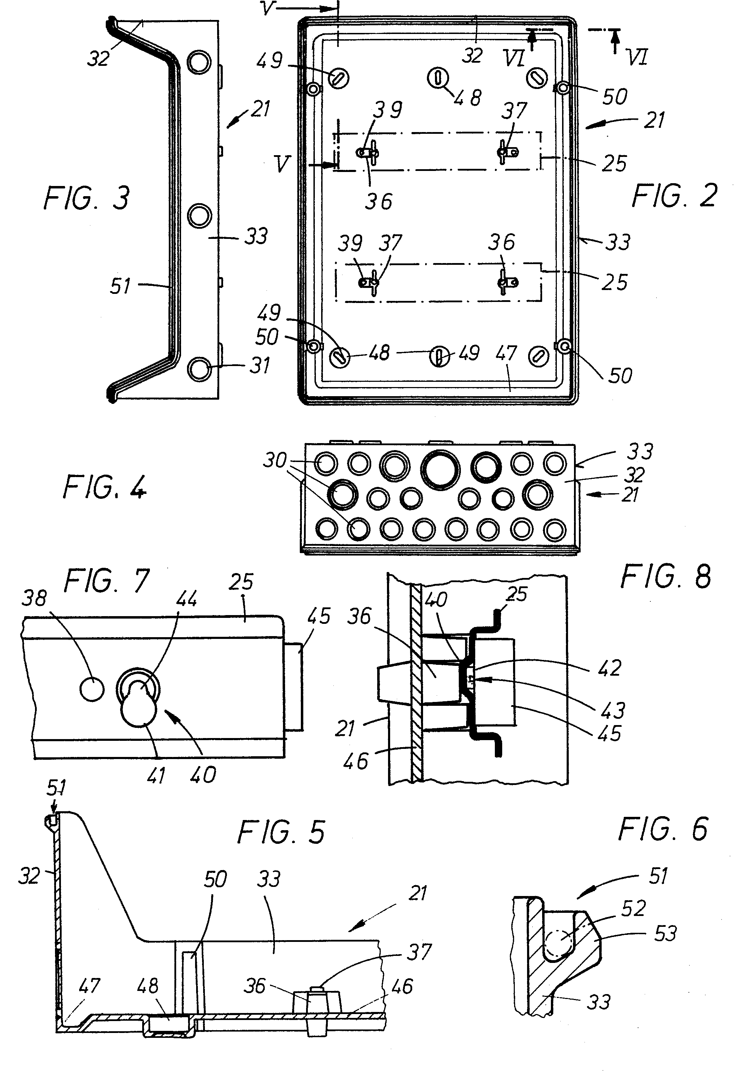

Bei dem Ausführungsbeispiel nach Fig. 2 sind zwei Trageschienen 25 vorgesehen, die strichpunktiert eingezeichnet sind. Diese Trageschienen ruhen auf Abstandshaltern 36, die den Endbereichen der Trageschiene zugeordnet und am Unterteil 21 angeformt sind. Diese Abstandshalter 36 weisen etwa eine Kreuzesform auf. Hierbei weist der Kreuzungspunkt der beiden Streben einen Zapfen 37 auf, der in eine Bohrung 38 der Tragschiene zur Befestigung eingreift, während am Ende der Längsstrebe des kreuzförmigen Abstandshalters 36 eine Schraubenaufnahme 39 vorgesehen ist. Auf der Querstrebe des kreuzförmigen Abstandshalters 36 ruht dann die Trageschiene 25, die somit gegen ein Verkippen gesichert ist. Wie aus den Fig. 6 und 7 zu erkennen ist, weist die Trageschiene 25 eine Öffnung 4o auf, die schlüssellochartig gestaltet ist. Hierbei weist der eine Teil 41 der schlüssellochartigen Öffnung 4o eine Breite auf, die etwas größer ist, als der Schraubenkopf 42 der Befestigungsschraube 43 für die Trageschiene, während der andere Teil 44 der Öffnung 4o größer als der Schraubenschaft aber kleiner als der Schraubenkopf ist. Wie aus Fig. 8 zu erkennen ist, ist der Teil 44 der Öffnung 4o aus der Trageschiene herausgeformt, so daß der Schraubenkopf 42 eine Aufnahme in diesen Formbereich findet, ohne daß der Schraubenkopf in die Trageschiene hineinragt. Es sei hier noch erwähnt, daß an beiden Enden der Trageschiene 25 vom Mittelsteg der hutförmigen Trageschiene ein Anschlag 45 abgebogen ist. Dieser Anschlag dient zur Sicherung von Automatensicherungen und Schaltgeräten, damit diese seitlich nicht von der Trageschiene herunterrutschen
können.

Wie aus Fig. 5 hervorgeht, ist der Boden 46 des
Unterteiles 21 etwas emporgewölbt, wobei an den Randbereichen ringsrum ein nutenförmiger Kanal 47 gebildet ist.
Dieser Kanal dient zum einen zur Versteifung des Unterteiles und zum anderen aber nimmt er bereichsweise
Kabel und Leitungen auf.

Wie in Fig. 2 zu erkennen ist, weist der Boden Befestigungsbereiche 48 auf. Diese Bereiche sind jeweils in zwei
Reihen zu je drei Befestigungsbereiche vorgesehen, wobei
die Befestigungsbereiche 48 ein langlochartiges Mittelteil
49 aufweisen, der bedarfsweise herausgebrochen wird. Hierbei
erstreckt sind das Langloch der beiden mittleren Befestigungs-
Bereiche in Längsrichtung des Gehäuses, während bei den
beiden seitlichen Befestigungsbereiche das Langloch
unter einen Winkel von 45° Grad bezüglich der Längsachse
des Gehäuses angeordnet ist. Es sei hier erwähnt, daß die
Befestigungsbereiche 48 etwas aus der Unterseite des
Unterteiles 21 hervorragen, so daß bei einer Befestigung
das Unterteil auf diesen Befestigungsbereich 48 ruht.

Es sei hier noch erwähnt, daß an den Seitenwänden
im Inneren des Unterteiles 21 Führungslager 5o vorgesehen sind, deren Bedeutung später noch beschrieben wird.
Wie aus Fig. 3 hervorgeht, sind die Wände des Unterteiles 21 unterschiedlich hoch gestaltet und zwar sind
die Seitenwände 33 wesentlich niedriger in ihrer Höhe
als die Stirnwände 32. Hierbei ist im Vergleich mit
Fig. 2 zu erkennen, daß die Seitenwände 33 insbesondere
im Bereich der Trageschienen 25 eine geringe Höhe aufweisen, um so auf diese Weise zu gewährleisten, daß im
Bereich der Trageschienen eine leichte Installation
zum Anschließen für die einzelnen Sicherungen, Automaten
und Schaltgeräte gegeben ist. Es sei hier noch vorgetragen, daß die Endbereiche der niedrigen Seitenwände 33, wie Fig. 3 zeigt, auf die Höhe der Stirnwände 32 geführt werden, so daß bei einer Seitenansicht, vergl. Fig. 3, ein wannenartiger Charakter im Aussehen des Unterteiles auftritt. Schließlich sei noch erwähnt, daß die Höhe der Seitenwände um mehr als 50 Prozent geringer ist, als die Höhe der Stirnwände 32. Im Vergleich mit Fig. 8 ist zu erkennen, daß die Höhe der Trageschienen etwa 50 Prozent der Höhe der Seitenwände 33 des Unterteiles 21 ausmacht.

In Fig. 4 sind nun die Einführungsöffnungen 3o in das Gehäuseunterteil 21 zu erkennen. Wie schon erwähnt, weisen die Einführungsöffnungen, die durch herausbrechbare Teile verschlossen sind, unterschiedliche Durchmesser auf, so daß Leitungen mit unterschiedlicher Größe eingeführt werden können.

Auch die Seitenwände 33 tragen Einführungsöffnungen 31. Diese Einführungsöffnungen sind ebenfalls verschlossen. Sie dienen hauptsächlich dazu bei mehreren nebeneinander montierten Gehäusen von Installationsgeräten diese aneinander zu befestigen und zugleich eine Durchführung zu dem jeweils anderen Gehäuse zu haben.

An ihrem freien Ende weisen die Stirnwände 32 und die Seitenwände 33 einen Dichtungsabschnitt 51 auf. Dieser Dichtungsabschnitt ist U-förmig gestaltet. Er nimmt in seinem Inneren eine Dichtring 52 auf, der strichpunktiert eingezeichnet ist. Der innere Schenkel des U-förmigen Dichtungsabschnittes 51 schließt mit der Innenwandung des Gehäuses ab. Der äußere Schenkel 53 des Dichtungsabschnittes 51 sowie das Mittelteil ragen dahingegen von der Außenseite der Seitenwände 33 ab, wie Fig. 6 zeigt. Hierdurch entsteht rund um das Unterteil 21 ein Anschlag, dessen Bedeutung ebenfalls später noch erklärt w.

In Fig. 9 ist die Draufsicht auf das Oberteil 22 gezeigt, allerdings bei abgenommenen Deckel 24. Hierdurch werden im Bereich des Deckels an den Seitenwänden des Oberteiles 22 Durchbrüche 54 erkennbar, die zur Schraubbefestigung zwischen Ober- und Unterteil dienen. Diese Durchbrüche sind in Führungsstiften 55 angeordnet, die in die Führungslager 5o des Unterteiles beim Zusammenbau eingreifen. Hierbei sind die Führungsstifte 55 so gestaltet, daß selbst dann wenn Ober- und Unterteil nicht genau aufeinander gesetzt werden, beim Aufsetzen eine Ausrichtung über die Führungsstifte in Verbindung mit den Führungslagern stattfindet. Zu diesem Zweck sind die Führungsstifte leicht elastisch gestaltet.

Es sei hier schon erwähnt, daß zur schwenkbaren Lagerung des Deckels Lageraufnahmen 56 vorgesehen sind. Diese Lageraufnahmen sind mittels einer Schraube 57 am Oberteil 22 befestigt, wobei hier in Fig. 9 die Schraubenlöcher 58 zu erkennen sind. Diese Schraubenlöcher sind so angeordnet, daß die Lageraufnahmen je nach Verwendung auf beiden Seiten befestigbar sind.

Wie bereits erwähnt, weist das Oberteil 22 Aufnahmen 23 auf. Im vorliegenden Teil weist, wie insbesondere Fig. 11 zeigt, das Oberteil 22 zwei Aufnahmen 23 auf. Diese erstrecken sich zwischen den beiden Seiten des Oberteiles. Wie Fig. 11 weiter zeigt, sind die Aufnahmen 23 so gestaltet, daß sie sich keilförmig erweitern. Im vorliegenden Fall ist der Boden der Aufnahmen 23 offen gestaltet, so daß die auf der Tragschiene angeordneten Geräte durch diese Öffnung 59 hindurchragen können.

Die keilförmige Aufnahme 23 weist auf ihrer unteren Keilfläche 27, vergl. Fig. 12, Rasten 29 auf. Diese Rasten haltern ein Beschriftungsfeld 28, so daß die einzelnen Geräte, die auf den Tragschienen sitzen, bei der Installation gleich bezeichnet werden können. Beim Einsetzen der Beschriftungsfelder werden diese leicht gewölbt, so daß die beiden Längskanten der Felder 28 die Rasten 29 hintergreifen.

Es sei hier bemerkt, daß das Beschriftungsfeld in Fig. 12 lediglich strichpunktiert eingezeichnet ist.

Rings um die Aufnahmen 23 ist eine Nut 61 vorgesehen.Diese Nut nimmt einen Dichtungsring auf, wobei der Dichtungsring über den Deckel fest angepreßt wird, so daß keine Feuchtigkeit und Staub über die Aufnahmen ins Gehäuseinnere gelangen kann.

Wie insbesondere aus Fig. 1o noch zu erkennen ist, sind im Befestigungsbereich des Deckels Hinterschneidungen 62 vorgesehen. In diese Hinterschneidungen greifen Rastvorsprünge des Deckels.

Wie aus Fig. 10 weiter zu erkennen ist, haben die Seitenwände eine wesentlich größere Höhe als die Stirnwände.aufweisen, so daß insgesamt beim Zusammenbau von Ober- und Unterteil ein kastenförmiges Gehäuse entsteht. Weiter sei noch erwähnt, daß an den freien Enden der Seitenwände und Stirnwände ein Dichtungsabschnitt 63 vorgesehen ist. Dieser Dichtungsabschnitt ist V-förmig gestaltet. Hierbei bildet der innere Schenkel 64 einen Teil der Seitenwand bzw. Stirn- wand, während der äußere Schenkel 65 von der Seiten- bzw. Stirnwand abragt, so daß wieder rings um das Oberteil ein Anschlag entsteht, der die gleiche Aufgabe hat, wie der äußere Schenkel 53 des Unterteiles 21. (vergl.Fig.13) Wie aus Fig. 9 und 11 zu erkennen ist, ist oberhalb der Aufnahmen 23 eine Vertiefung 35 vorgesehen. Dieser Vertiefung werden Beschriftungsfelder eingeklebt, wobei durch die Vertiefung sichergestellt ist, daß diese Beschriftungsfelder nicht ungewollt beschädigt werden können.

In Fig. 14 ist nun eine Draufsicht auf den Deckel dargestellt und zwar sind an dem oberen Rand zwei Lagerzapfen 66 zu erkennen. Mit diesen Lagerzapfen greift der Deckel in die Lageraufnahmen 56, wie Fig. 17 zeigt.
Den Lagerzapfen gegenüberliegend ist ein Griffteil
67 am Deckel vorgesehen. Dieses Griffteil 67 weist
drei in Abstand angeordnete Rastnasen 68 auf, die in der
Schließstellung in die Hinterschneidungen 62 des Oberteiles 22 eingreifen. Das Griffteil 67 weist nun Verdrehbereiche 69 auf, die über Zwischenstücke 70 am eigentlichen
Deckelteil angeformt sind. Bei einer Schwenkung des Griffteiles 67 tritt nun eine Torsion in den Verdrehbereichen 69
auf. Es sei hier erwähnt, daß die Verdrehbereiche im Querschnitt rechteckig gestaltet sind. Über die Verdrehbereiche
ist jederzeit sicher gewährleistet, daß in der Schließstellung
die Rastnasen in den Haltehinterschneidungen bleiben.

Auf der Innenseite des Deckels 24 ist eine kragenartige Wand 71 vorgesehen, die sich mit ihrem freien
Ende auf den in der Nut 61 befindlichen Dichtring in der
Schließstellung des Deckels abstützt.

Wie aus Fig. 17 noch weiter hervorgeht, greifen die
Lagerzapfen 66 des Deckels in die Lageraufnahmen 56.
Hierbei weisen die Lageraufnahmen eine Ausnehmung 72
auf, deren Breite etwas geringer ist, als der Durchmesser der Lagerzapfen 66. Da die Lageraufnahmen 56
federnd gestaltet sind, ist ein leichtes Abnehmen und
Anbringen des Deckels 54 in den Lageraufnahmen möglich.
Sollten in der Offenstellung des Deckels unbeabsichtigte
Stöße auftreten, so können die Lagerzapfen 66 über die
Ausnehmung 72 schnell von den Lageraufnahmen 56 freikommen.

Wie bereits erwähnt, ist die dargestellte Ausführung
nur eine beispielsweise Verwirklung der Erfindung; diese
ist nicht beschränkt. Vielmehr sind noch mancherlei
Abänderungen und Anwendungen möglich. Nach dem gezeigten Installationsgerät mit zwei bzw. drei Aufnahmen ist es
auch möglich ein Installationsgerät nur mit einer
Aufnahme auszustatten. Weiter ist es möglich die
Beschriftungsfelder auf den Keilflächen noch mit einer
durchsichtigen Plastikhülle zu umgeben, die dann
mit den Keilflächen verrastet wird. Weiter ist es auch
möglich, daß die Seitenwände des Unterteiles noch etwas
tiefer heruntergezogen werden können, beispielsweise
in dem Bereich der Höhe der Trageschienen. Hierbei müßten
dann dementsprechend die Seitenwände des Oberteiles eine
größere Höhe aufweisen.

**PATENTANWÄLTE**

**DIPL.-PHYS. BUSE · DIPL.-PHYS. MENTZEL · DIPL.-ING. LUDEWIG**

Unterdörnen 114 · Postfach 200210 · 5600 Wuppertal 2 · Fernruf (0202) 557022/23/24 · Telex 8591606 wpat

0123788

X1

5600 Wuppertal 2, den

Kennwort: "Mittelvertiefung"

Firma Gustav Hensel KG, 5940 Lennestadt, Burcherstraße

---

A n s p r ü c h e :

1.) Elektrisches Installationsgerät, insbesondere
Automatenkasten, Sicherungskasten, Kleinverteilerkasten od.dgl. mit einem kastenförmigen Gehäuse, das
aus einem Unterteil und einem Oberteil besteht, hierbei
sind im Kasteninneren zur Halterung der Sicherungen,
Automaten, Schaltgeräte u.dgl. am Unterteil Trageschienen vorgesehen, während am Oberteil wenigstens
eine im Kasteninneren sich erstreckende den Trageschienen gegenüberliegende Aufnahme ausgebildet ist,
die durch einen Deckel abdeckbar ist, wobei zwischen
Oberteil und Unterteil eine Dichtung mit Dichtring
vorgesehen ist,

d a d u r c h  g e k e n n z e i c h n e t,
daß die beiden seitlichen Seitenwände (33) des Unterteiles (21) eine wesentlich geringere Höhe aufweisen,
als die beiden Stirnseiten (32), hierbei ist die Höhe
der Seitenwände (33) größer als die Höhe der am Unterteil (21) angeordneten Trageschienen (25) und daß die
Dichtung zwischen Ober- und Unterteil (21, 22) des
Gehäuses (20) als Labyrinthdichtung (51,52,63) ausgebildet ist.

2.) Installationsgerät nach Anspruch 1, dadurch gekennzeichnet, daß die Labyrinthdichtung im Querschnitt am
Unterteil (21) als ein U-förmiger Abschnitt (51) ausgebildet ist, in dessen Inneren der Dichtring (52) angeordnet ist und am Oberteil als V-förmiger Abschnitt
(63),dessen einer Schenkel (64) sich auf dem Dichtring (52) abstützt.

3.) Installationsgerät nach Anspruch 1 oder 2, dadurch
gekennzeichnet, daß ein Schenkel (53,65) des
Dichtungsabschnittes (51,63) bereichsweise aus der
Gehäusewand nach außen hervorragt.

4.) Installationsgerät nach Anspruch 1, dadurch gekennzeichnet,
daß die beiden Stirnseiten (32) des Unterteiles (21)
eine Vielzahl von Kabeleinführungsöffnungen (30) aufweisen,
die durch herausbrechbare Wandteile verschlossen sind.

5.) Installationsgerät nach einem oder mehreren der
Ansprüche 1 bis 4, dadurch gekennzeichnet, daß das
Gehäuseoberteil (22) elastische Führungsstifte (55)
aufweist, die in Lager (50) des Unterteiles (21)
eingreifen.

6.) Installationsgerät nach einem oder mehreren der
Ansprüche 1 bis 5, dadurch gekennzeichnet, daß am
Unterteil (21) zu dessen Befestigung an eine Wand
zwei in Abstand angeordnete Reihen von jeweils
drei über herausbrechbare Teile verschlossene Befestigungsöffnungen (49) vorgesehen sind, die langlochartig gestaltet sind, hierbei erstreckt sich
das mittlere Langloch in Gehäuselängsrichtung, während
die beiden äußeren in einem Winkel von ca. 45° Grad
zur Gehäuselängsrichtung angeordnet sind.

7.) Installationsgerät nach einem oder mehreren der
Ansprüche 1 bis 6, dadurch gekennzeichnet, daß auf
der Gehäuseoberseite außerhalb des Deckels (24) eine sich nahezu über die Breite erstreckende
Vertiefung (35) vorgesehen ist.

8.)   Installationsgerät nach einem oder mehreren
der Ansprüche 1 bis 7, dadurch gekennzeichnet,
daß die Trageschiene (25) in Abstand über den
Boden des Unterteiles (21) angeordnet ist.

9.)   Installationsgerät nach Anspruch 8, dadurch
gekennzeichnet, daß am Unterteil (21) angeformte Abstandshalter (36) zur Auflage der
Trageschienen (25) vorgesehen sind, hierbei
weisen die Abstandshalter (36) eine Kreuzform auf.

10.)  Installationsgerät nach Anspruch 8 oder 9,
dadurch gekennzeichnet, daß die Abstandhalter
(36) zum einen einen Zapfen (37) aufweisen,
der zur Lagesicherung in eine Bohrung (38) der
Trageschiene (25) eingreift und zum anderen
eine Schraubenaufnahme (39) zur Schraubbefestigung der Tragschiene.

11.)  Installationsgerät nach einem oder mehreren
der Ansprüche 8 bis 10, dadurch gekennzeichnet,
daß die Öffnungen (40) in der Trageschiene
in Draufsicht schlüssellochartig gestaltet
sind.

12.)  Installationsgerät nach einem oder mehreren
der Ansprüche 8 bis 11, dadurch gekennzeichnet,
daß die Randbereiche der Schraubenöffnungen
(40) gegenüber dem Boden der Tragschiene (25)
vertieft angeordnet sind, derart, daß der
Schraubenkopf (42) nicht aus dem Tragschienenboden hervorragt.

13.) Installationsgerät nach einem oder mehreren der Ansprüche 1 bis 12, dadurch gekennzeichnet, daß die Trageschienen (25) an ihren beiden Enden Anschläge (45) aufweisen.

14.) Installationsgerät insbesondere nach einem oder mehreren der Ansprüche 1 bis 13, dadurch gekennzeichnet, daß die am Gehäuseoberteil (22) angeordnete Aufnahme (23) sich keilförmig nach dem Deckel (24) erweitert.

15.) Installationsgerät nach Anspruch 14, dadurch gekennzeichnet, daß jeweils die untere Keilfläche (27) der keilförmigen Aufnahme (23) ein Beschriftungsfeld (28) aufweist.

16.) Installationsgerät nach Anspruch 15, dadurch gekennzeichnet, daß das Beschriftungsfeld (28) an der Keilfläche durch eine Verrastung (29) halterbar ist.

17.) Installationsgerät insbesondere nach einem oder mehreren der Ansprüche 1 bis 16, dadurch gekennzeichnet, daß der die Aufnahmen (23) verschließende schwenkbare Deckel (24) zur Halterung in seiner Schließstellung wenigstens einen Rastverschluß (68) aufweist, der als Torsionsfederverschluß gebildet ist, hierbei sind bei Bewegung der Rastnase (68) des Verschlusses aus den Haltehinterschneidungen (62) Werkstoffbereiche (69) verdrehbar.

18.) Installationsgerät nach Anspruch 17, dadurch gekennzeichnet, daß der Torsionsfederverschluß mehrere in Abstand angeordnete Rastnasen (68)
aufweist, die an einem Griffteil (67) angeordnet sind, hierbei ist das Griffteil über
Verdrehbereiche (69) am Deckel angeformt.

19.) Installationsgerät nach einem oder mehreren
der Ansprüche 1 bis 18, dadurch gekennzeichnet,
daß zur schwenkbaren Lagerung der Deckel mit
seinem Lagerzapfen (66) in am Gehäuse (20)
befestigte Lageraufnahmen (56) eingreift, hierbei
weisen die federnden Lageraufnahmen (56) auf der
dem Gehäuse abgewandten Seite eine sich in
Richtung der Lagerzapfen (66) erstreckende Ausnehmung (72) auf, deren Breite geringer ist, als
der Durchmesser der Lagerzapfen (66).

20.) Installationsgerät nach einem oder mehreren oder
der Ansprüche 1 bis 19, dadurch gekennzeichnet,
daß die Befestigungsstellen für die Lageraufnahmen
(56) sowie die Hinterschneidungen (62) zum Eingriff
der Rastnasen (68) an beiden Gehäuseseiten zugleich vorgesehen sind.

FIG. 1

0123788

2/4

FIG. 3

FIG. 2

FIG. 4

FIG. 7

FIG. 8

FIG. 5

FIG. 6

0123788

FIG. 10

FIG. 9

FIG. 11

FIG. 12

FIG. 13

0123788

66  XV →   XVI →  66                    66        66

24                              24        24

68 69 70 69 68 69 70 69   68  68        68

67                        67             67

FIG. 14   XV →  XVI →      FIG.15  FIG.16

FIG.17

56 66 71                    24        71 70 69 67

72

57                                    61 29 27            62        68

58                                                                  22

64
65                          55                    55            63
52                                                50            52
53
51                  50                                              51
33
21

20   47    48      46              48